# EUROPEAN PATENT APPLICATION

(11) **EP 4 129 534 A1**
(43) Date of publication of application: **08.02.2023**
(21) Application number: 21189511.5
(22) Date of filing: 03.08.2021
(51) Int. Cl.: B22F 1/068, B22F 9/08, C22C 1/04, C22C 19/00

(54) **AB5-TYPE BASED HYDROGEN STORAGE ALLOYS, METHODS OF PREPARATION AND USES THEREOF**

(71) Applicant: GRZ Technologies SA, 1772 Grolley (CH)
(72) Inventor: SUN, Tai, 3177 Laupen (CH); GALLANDAT, Noris, 1716 Schwarzsee (CH)
(74) Representative: reuteler & cie SA

(57) **Abstract**

The invention relates to metal hydrides for storing hydrogen, in particular AB5 based metal hydrides, methods of production and uses thereof.

## Description

### Field of the Invention

This invention relates to metal hydrides for storing gaseous hydrogen, in particular AB5-type based metal hydrides, methods of production and application thereof.

### Background of the Invention

Hydrogen storage is a key step in the decarbonisation of fossil fuel technologies by renewable energy. A variety of storage methods including pressurized gas, hydrogen liquefaction and absorption in solid materials have been considered.

There are three types of hydrogen storage materials: those that use adsorption to store hydrogen on the surface of the material, those that use absorption to store the hydrogen within the material and hydride storage which uses a combination of solid materials and liquid.

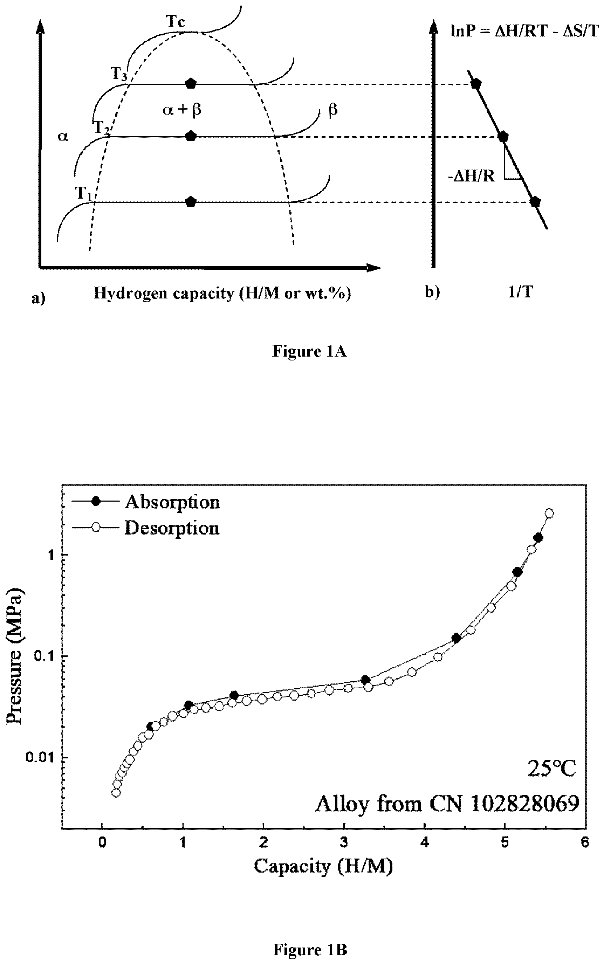

Hydride storage uses the reaction with hydrogen. This method to store hydrogen is also known as *'chemical hydrogen storage'* and is based on the formation by the hydrogen of an interstitial compound with elemental metals such as palladium, magnesium, and lanthanum, intermetallic compounds, light metals like aluminium, or some alloys. Metal hydrides dissociate molecular hydrogen into atoms on their surface and store them in the metallic lattice, thereby producing heat. Conversely, when hydrogen is released from a hydride, heat is absorbed. These hydrides can absorb large volumes of gas, with palladium, for example, able to absorb volumes of hydrogen 900 times that of its own. The process proceeds as follows: **a) absorption:** Hydrogen gas molecules (H₂) stick to the metal surface and is then dissociated at the surface before absorption, breaking down into hydrogen atoms (H). The hydrogen atoms then penetrate into the interior of the metal crystal to form a new solid substance called a *"metal hydride".* The metal atoms are usually stretched apart to accommodate the hydrogen atoms. The physical arrangement (structure) of the metal atoms may also change to form a hydride; **b) desorption:** Hydrogen atoms migrate to the surface of the metal hydride, combine into hydrogen molecules H₂ and flow away as hydrogen gas. The metal atoms contract to form the original metal crystal structure. The thermodynamic aspects of hydride formation from gaseous hydrogen are described by pressure - composition isotherms as illustrated in **Figure 1A** which show typical absorption and desorption isotherms of H₂ in metal hydrides. The hydrogen absorption reaction in the material is typically exothermic (producing heat) whereas the hydrogen desorption reaction is conversely endothermic (absorbing heat). The low pressure and thermodynamics of metal hydride systems increase the level of safety of the system: in case of a container failure, the hydrogen will be released slowly, the process being thermally limited by the endothermic desorption reaction. Typically, good H₂ storage capacities are considered to be more than 1.45 wt.%.

Various metal alloys and intermetallics react with hydrogen, forming metal hydrides. By controlling temperature and pressure appropriately, the direction of the chemical reaction can be adjusted. Typical metal hydrides are in the form of powders whose particles are only a few millionths of a meter (micrometers) across.

Metal hydride storage systems are thus safe, reliable and compact in comparison to compressed gas or liquefied H₂ storage systems. Further, they require minimal maintenance and have a long lifetime. Metal hydrides are therefore of high interest for the storage of hydrogen under low pressures as many metals and alloys are capable of reversibly absorbing significant amounts of hydrogen, whereby a high volumetric density of up 150 kgH₂/m³ is reachable and have been the subject of many recent developments (Bellosta von Colbe et al., 2019, International Journal of Hydrogen Energy, 44, 7780-7808*).*

Metals belonging to groups IIA to VA in the Periodic Table readily combine with hydrogen to form metal hydrides. In particular, alloys of type AB2 are those where metal A is Ti or Zr, and metal B is third transition one. Another group of alloys is of AB5 type. Typical examples are LaNis and CaNis. The capacity of hydrogen storage of these alloys is around H/M = 1. Owing to the superior hydrogenation properties of LaNis, a lot of studies have been made on its properties and basic characteristics. Different types of hydrogen storage materials were synthesized, screened and evaluated at laboratory scale (e.g. Mg-based and AB2/AB5 types) but just a few of them were chosen to develop full-scale tank systems.

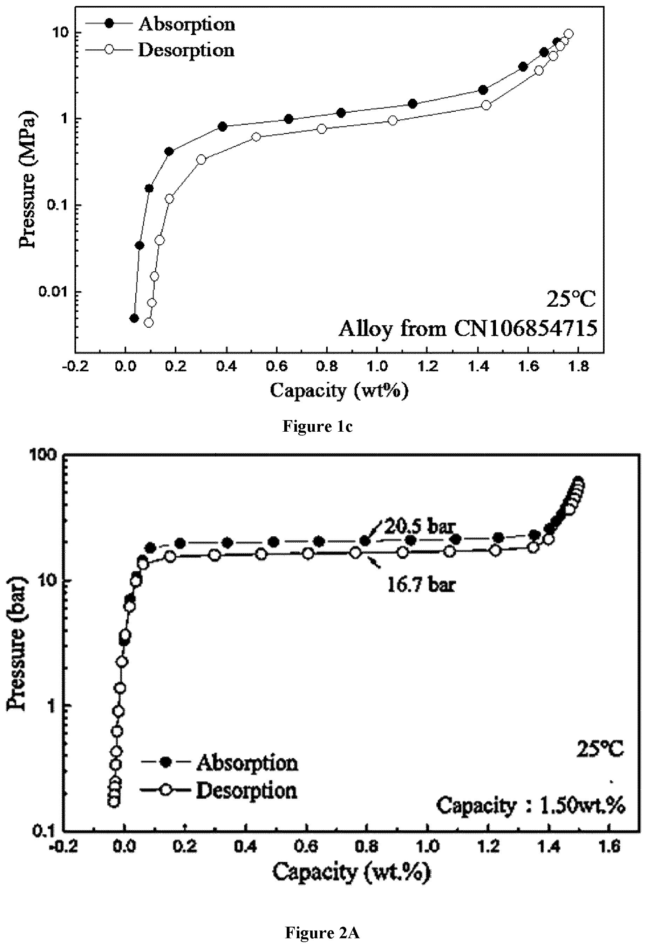

In fact, most of the currently known commercial metal hydrides were developed for electrochemical application in NiMH batteries. These alloys need to work in electrolyte environment, and their plateau pressure are usually below 1 bar at room temperature in order to keep the internal pressure of the battery in a safe range. For example, in CN 102828069, Wang et al. claimed a Praseodymium-neodymium-free low-cost superlong life type hydrogen storage alloy for batteries, the plateau pressure is less than 0.1 MPa **(****Figure 1B****).** Such a low hydrogen storage/releasing pressure at room temperature is not applicable in a hydrogen energy storage and compression system since the input H₂ pressure of the fuel cell system or pressurized storage tank usually requires H₂ pressure higher than 5 bar, sometimes even higher than 10 bar, and the working environment are usually in gaseous hydrogen. Some AB5 alloy have been developed for high-pressure gaseous applications. In particular, CN106854715 claimed a LaₐY_{b}Mg_{c}Ca_{d}Ni₉ alloy, which could also be used for gaseous hydrogen storage application. However, the slope of its pressure plateau is high, and the plateau pressure is only 10 atm at room temperature **(****Figure 1C****).** The reversibility of the alloy is not good, which leads to a lower useful capacity in applications. The large-scale production difficult increase a lot, because of the usage of Mg and Ca, due to their strong volatility characteristics.

An additional problem from currently available AB5 materials at high pressure application is the large hysteresis between the hydrogen absorption and desorption processes. The hysteresis of the alloy tends to be larger than 12 bar when the dehydrogenation pressure increases to above 10 bar.

### Summary of the Invention

It is an object of the present invention to provide an alloy of AB5 type of that is suitable for gaseous hydrogen storage under high pressure use (e.g. >5 bar at room temperature).

It is advantageous to provide an alloy of AB5 type presenting long-cycle life (>2000) with relatively small hysteresis (<5 bar).

It is advantageous to provide an alloy of AB5 type which keeps a good overall absorption capacity (e.g. >1.45 wt.%), even when the dehydrogenation pressure goes above 50 bar at room temperature.

It is advantageous to provide an alloy of AB5 type with flat absorption/desorption plateau pressure suitable for solid-state hydrogen storage and compression system.

Objects of this invention have been achieved by providing a Ni-based AB5-type metal hydride alloy according to claim 1, a powder thereof and use thereof according to claim 12.

Objects of this invention have been achieved by providing a method of preparing a Ni-based AB5 metal hydride alloy according to claim 7.

Objects of this invention have been achieved by providing a hydrogen storage system according to claim 13.

Disclosed herein is a hydrogen storage alloy having an AB5 type crystal structure, its A site contains La, Ce and MI elements, and its B site contains Ni, Co and Fe elements, represented by the general Formula (I)

LaₓCe_{y}MI_{(1-x-y)}NiₐCo_{b}Fe_{c}M_{d} (I)

in which x, y, a, b, c and d are molar ratios, where Ml is at least one element selected from Y, Ti, Zr and M is selected from Cu and Mn; 0.15 ≤ x ≤ 0.95; 0.05 ≤ y ≤ 0.85; 0 ≤ (1-x-y) ≤ 0.1; 3.8 ≤ a ≤ 4.2; 0.1 ≤ b ≤ 1.2; 0.01 ≤ c ≤ 0.3; 0 ≤ d ≤ 0.1; 4.8 ≤ (a+b+c+d) ≤ 5.15.

Further disclosed herein is a method for the preparation of hydrogen storage alloy having an AB5 type crystal structure by rapid melt solidification by spinning roller quenching, wherein said method comprises the steps of:
- Providing a melt of all the metal elements in a furnace under a controlled inert atmosphere (e.g. Argon) at a pressure from about 30 KPa to about 70 KPa;
- Casting the melt within said furnace onto a spinning roller rolling at a speed from about 1 m/s to about 9 m/s where the melt rapidly solidifies and breaks into flakes when entering into a cooling unit (e.g. water-cooled collector);
- Leaving the flakes to further cool down to a temperature below 50°C;
- Filling the furnace with air and collecting the obtained flakes.

Further disclosed herein is a hydrogen storage system comprising an alloy of AB5 type according to the invention.

Further objects and advantageous aspects of the invention will be apparent from the claims, and from the following detailed description and accompanying figures.

### Brief Description of the drawings

The invention will now be described with reference to the accompanying drawings, which by way of example illustrate embodiments of the present invention and in which:
**Figure 1** represents pressure - composition - temperature (PCT) isotherms of a metal hydride. A: schematic graphical representations of typical metal hydrides useful for hydrogen storage (https://www.ctcms.nist.gov/hydrogen_storage/research_pct.html); **B:** pcT curve of the material described in CN102828069; **C:** pcT curve of the material described in CN106854715.
**Fig. 2** represents pressure - composition - temperature (PCT) isotherms of a metal hydride according to the invention. **A:** as described in Example 2; **B:** as described in Example 3.
**Fig. 3** is a schematic representation of a method of preparation of an alloy of the invention by rapid melt solidification by spinning roller quenching.

### Detailed description of embodiments of the invention

According to a particular aspect, is provided a hydrogen storage alloy having an AB5 type crystal structure of Formula (I) in which b, c, d, Ml and M are as described above and wherein 0.15 ≤ x ≤ 0.45 and 0.55 ≤ y ≤ 0.85 (Alloy (Ia)).

According to another particular aspect, is provided a hydrogen storage alloy having an AB5 type crystal structure of Formula (I) in which b, c, d, Ml and M are as described above and wherein 0.55 ≤ x ≤ 0.95 and 0.05 ≤ y ≤ 0.45 (Alloy (Ib)).

According to a particular aspect, is provided a hydrogen storage alloy having an AB5 type crystal structure of Formula (I), wherein 0.9 ≤ x+y ≤ 1.

In the present invention, the hydrogen storage alloy has at 25°C a hydrogen absorption plateau between 5-150 bar and a desorption plateau between 3-100 bar.

In the present invention, the hydrogen storage alloy has at 25°C a hydrogen storage capacity of about 1.4 to about 1.55 wt% (typically from about 1.45 to 1.50 wt%).

A hydrogen storage according to the invention can be prepared by typical methods used for AB5 alloys such as described in CN1602366.

Typically, for batches up to 300 kg, raw materials of each required metal elements are placed in a water-cooled copper crucible in an Arc melting furnace and the furnace is put under *vacuum* (e.g. 5*10⁻³ Pa (PABS)) and then filled with a controlled atmosphere (e.g. Ar, > 99.99%) under a pressure from about 30 KPa to about 70 KPa (e.g. 50 kPa (PABS)). The raw materials are melted and kept at a melting temperature for about 5 to 10 min and then the melted mixture is let solidified. The solidified alloy (ingot) is turned upside down and melted again and the operation is repeated few times (e.g. 2 to 6 times, such as 3 times) in order to achieve an homogeneous composition of the resulting alloy. Once the last cycle is over and the temperature of the solidified alloy is below 50°C, the furnace is put in communication with air and the ingot alloy is collected.

For batches from 3 to about 1'000 kg, a method for the preparation of hydrogen storage alloy having an AB5 type crystal structure by rapid melt solidification by spinning roller quenching as described herein is advantageously used. In particular, compared with Arc-melting processes, the alloy prepared by this method has a more homogenous composition, stable crystal structure, less phases other than AB5 structure and lower crystal strain (thus with a smaller hysteresis and more flat plateau pressure). The alloy does need to undergo heat-treatment process before usage, while maintain a long cycle life. This method is also suitable for large scale production and remarkably reduces production cost.

According to a particular embodiment, the metal elements are melted in a furnace initially purged and put under *vacuum* (e.g. 5*10⁻³ Pa (PABS)) and then filled with a controlled inert atmosphere (e.g. Argon or He> 99.99%)) at a pressure from about 30 KPa to about 70 KPa (e.g. 50 kPa (PABS)).

According to a further particular embodiment, the metal elements are melted in a Al₂O₃-based crucible placed in the furnace.

According to a further particular embodiment, after all the metals are melted, the temperature is reduced to a temperature between about 1'350 and 1'450°C and hold for about 5 to 10 min.

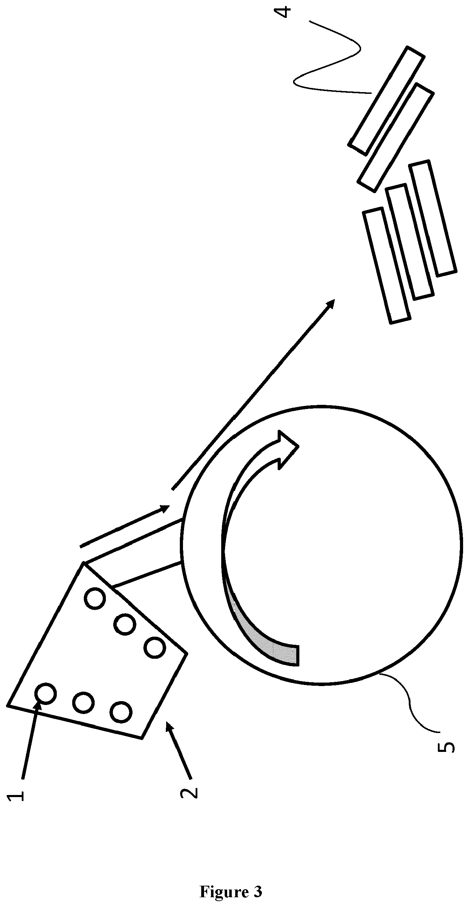

Referring to **Figure 3****,** the metal mixture is melted in a crucible **1** (e.g. heated by an induction coil **2**) placed in the furnace in said controlled atmosphere and then casted onto a spinning roller **3** (e.g. copper roller) rolling at a speed where the melt rapidly solidifies and breaks into flakes **4** when entering into a cooling unit (e.g. water-cooled collector).

According to a further particular embodiment, the melted mixture is casted onto a spinning roller (e.g. copper roller) rolling at a constant speed from about 1.5 to about 9 m/s where the melt rapidly solidifies and breaks into flakes. The thickness of the flakes will depend on the roller speed, the lower the speed, the thicker the flakes. According to a particular aspect, the thickness of the flakes typically ranges from 0.1- 0.6 mm.

According to a further particular embodiment, the flakes are left to cool down in the furnace at a temperature in a water-cooled chamber.

The alloy of the invention could be used directly from the obtained flakes or can undergo a heat-treatment under the melting temperature of the alloy, when needed. The heat treatment is applied to further reduce the hysteresis and improve the cycle performance. Typically, a heat treatment is carried out in a furnace under *vacuum* (e.g. 9*10⁻² Pa (PABS)), wherein the temperature is raised up to about 200°C and hold to this temperature for about 20 min. Before further increasing the temperature of the furnace, it is filled with an inert atmosphere (e.g. pure Argon (>99.99%)) at a pressure from about 30 KPa to about 70 KPa (e.g. to the pressure of 50 KPa (PABS)). The temperature of the furnace is then increased to a temperature between about 850 and 1'150°C which is hold for about 0.5 to about 72 h. The temperature-treated alloy is then cooled down at a rate of about 5 to about 20 K/min. Once the temperature of the alloy is below 60°C, the furnace is put in communication with air and the alloy is collected.

According to a further embodiment, is provided a method for the preparation of hydrogen storage alloy having an AB5 type crystal structure by rapid melt solidification by spinning roller quenching, wherein said method further comprises a heat treatment step.

The alloy according to the invention (heat-treated or not) can be used in the form of a powder. In particular, the obtained alloys are then crunched into a powder by mechanical or jet milling under the inert gas (e.g. N₂ or Ar, Ar preferred). Typically, the particle size of the alloy could be from about 0.5 mm to about 3 mm depending on the hydrogen storage system it will be used for.

The alloy powder can be then stored as a powder under vacuum or inert gas (e.g. N₂ or Ar, Ar preferred).

Alloys powder can be then used in hydrogen storage system as described in *Bellosta von Colbe et al., 2019, supra.*

Examples illustrating the invention will be described hereinafter in a more detailed manner and by reference to the embodiments represented in the Figures.

### EXAMPLES

### Example 1: Preparation of alloys according to the invention

### Example 1a): Preparation with arc melting furnace

An alloy of the invention, in particular of formula La0.6Ce0.3Ni4.2 Co0.3Fe0.4Mn0.1 (Ia) was prepared.

The required amounts of the metals according to the formula were prepared for a total weight of 1kg and placed in a water-cooled Cu crucible in an Arc melting furnace. The furnace was evacuated until the vacuum reached 5*10⁻³ Pa (PABS). Then, the furnace was filled with pure Argon (>99.99%) to a pressure of 50 KPa (PABS). The power was then increased until the raw materials started to melt. All the metals were melted and the power was held for 5 min. The melting was then stopped, waiting until the solidification of the alloy. The alloy was turned upside down, melted again, repeating this step 3 times in order to make the composition of the alloy more homogeneous. It was then waited until the temperature of the flake dropped below 50°C. Finally, the furnace was refilled with air and the alloy was taken out as an ingot.

After the melting, the as-prepared alloy was placed in the heat-treatment furnace. The furnace was evacuated until the vacuum reached 9*10⁻² Pa (PABS). The temperature was then increased to 200°C and held for 30min. The furnace was then filled with pure Argon (>99.99%) to a pressure of 50 KPa (PABS). The temperature was then increased to 800°C and held for 36 hours. The ally was then cooled down at a speed of 5 K/min., waiting until the temperature of the alloy dropped below 60°C. Finally, the furnace was refilled with air to atmosphere pressure and the alloy taken out of the furnace.

### Example 1b: preparation with induction melting furnace

An alloy of the invention, in particular of formula La0.3Ce0.65Ti0.05Ni3.8Co0.2Fe1.0 (Ib) was prepared.

The required amount of the metals was weighted according to the formula Ib in a total weight of 750 kg and placed in a Al₂O₃-based crucible in an industrial induction melting furnace. The furnace was evacuated until the vacuum reached 5*10⁻³ Pa (PABS), then filled with Helium (>99.99%) to the pressure of 50 KPa (PABS). The metals were heated up to 1450°C and been melt. After all metals are melted, the temperature was reduced to 1350°C and hold for 10 min. The melt was cast onto a spinning Cu roller, the speed of which was set to be 5 m/s, the thickness of the flake is around 0.1 mm. The solidified flake will be led to a water-cooled chamber for further cool down. The furnace was refilled with air and the flake was taken out when the temperature of the flake drop below 50°C. The alloy could be used without further treatment.

### Example 2: Hydrogen storage capacity of alloys of the invention

The H2 storage performance of the alloy prepared under Example 1 has been tested as follows. 3g of alloy ingot/flake was broken into powder (size< 100mesh) and loaded into a stainless cylindrical sample chamber. The alloy was charged with constant 5MPa of hydrogen pressure for 2 hours. After that the sample was evacuated for 30min. The charging-evacuation step was repeated at least 3times, in order to fully activate the alloy.

A fully-automatic, and computer-controlled volumetric apparatus (known as Sievert's apparatus, or PCT apparatus) will be used to measure the amount of hydrogen absorbed by the alloy at 25°C in water bath.

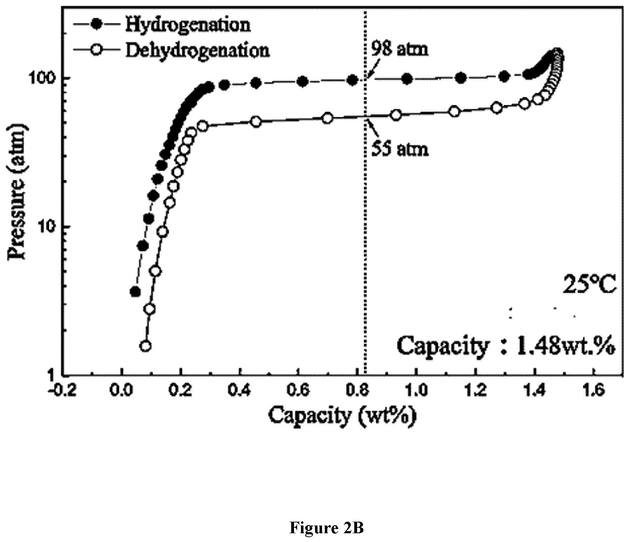

As can be seen under **Figure 2****,** the alloys of the invention have a much higher and wider desorption plateau than conventional AB5 alloys, in particular those used for NiMH batteries at room temperature. The H2 charging pressure is also advantageously higher.

## Claims

1. A hydrogen storage alloy having an AB5 type crystal structure, its A site contains La, Ce and MI elements, and its B site contains Ni, Co and Fe elements, represented by the general Formula (I):
LaₓCe_{y}MI_{(1-x-y)}NiₐCo_{b}Fe_{c}M_{d} (I)
in which x, y, a, b, c and d are molar ratios, where Ml is at least one element selected from Y, Ti, Zr and M is selected from Cu and Mn; 0.15 ≤ x ≤ 0.95; 0.05 ≤ y ≤ 0.85; 0 ≤ (1-x-y) ≤ 0.1;3.8 ≤ a ≤ 4.2; 0.1 ≤ b ≤ 1.2; 0.01 ≤ c≤ 0.3; 0 ≤ d ≤ 0.1;4.8 ≤ (a+b+c+d) ≤ 5.15.

2. A hydrogen storage alloy according to claim 1, wherein 0.15 ≤ x ≤ 0.45 and 0.55 ≤ y ≤ 0.85 and c, d, Ml and M are as described in the preceding claim.

3. A hydrogen storage alloy according to claim 1, wherein 0.55 ≤ x ≤ 0.95 and 0.05 ≤ y ≤ 0.45 and c, d, Ml and M are as described in the preceding claims.

4. A hydrogen storage alloy according to claim 1, wherein 0.9 ≤ x+y ≤ 1.

5. A hydrogen storage alloy according to any one of the preceding claims, wherein the hydrogen storage alloy has at 25°C a hydrogen absorption plateau between 5-150 bar and a desorption plateau between 3-100 bar.

6. A hydrogen storage alloy according to any one of the preceding claims, wherein the hydrogen storage alloy has at 25°C a hydrogen storage capacity of about 1.4 to about 1.55 wt% (typically from about 1.45 to 1.50 wt%).

7. A method for the preparation of hydrogen storage alloy having an AB5 type crystal structure according to any one of the preceding claims by rapid melt solidification by spinning roller quenching, wherein said method comprises the steps of:
- Providing a melt of all the metal elements in a furnace under a controlled inert atmosphere at a pressure from about 30 KPa to about 70 KPa;
- Casting the melt within said furnace onto a spinning roller rolling at a speed from about 1.5 to about 9 m/s where the melt rapidly solidifies and breaks into flakes when entering a cooling unit;
- Leaving the flakes to further cool down to a temperature below 50°C;
- Filling the furnace with air and collecting the obtained flakes.

8. A method according to claim 7 wherein the spinning roller (e.g. copper roller) is rolling at a constant speed from about 1.5 to about 9 m/s.

9. A method according to claim 7 or 8, wherein the obtained alloy is subjected to a further temperature treatment typically at a temperature between about 850 and 1' 150°C for about 0.5 to about 72 h.

10. An alloy obtainable by a method according to any one of claims 7 to 9.

11. A powder of an alloy according to any one of claims 1 to 6 and 10, wherein the particle size of the alloy could be from about 0.5 mm to about 3 mm.

12. Use of an alloy according any one of claims 1 to 6 and 10 for storing hydrogen.

13. A hydrogen storage system comprising an alloy according any one of claims 1 to 6 and 10 or a powder thereof.
